# EUROPÄISCHE PATENTSCHRIFT

(11) **EP 1 715 200 B1**
(45) Veröffentlichungstag und Bekanntmachung des Hinweises auf die Patenterteilung: **04.05.2011**
(21) Anmeldenummer: 06002018.7
(22) Anmeldetag: 01.02.2006
(51) Int. Cl.: F16C 11/06

(54) **Kugelgelenkverbindung**
Ball joint connection
Articulation à rotule

(30) Priorität: 20.04.2005 DE 102005018153; 20.08.2005 DE 102005039402
(43) Veröffentlichungstag der Anmeldung: 25.10.2006
(73) Patentinhaber: AUDI AG, 85045 Ingolstadt (DE)
(72) Erfinder: Bschierl, Christian, 85095 Denkendorf (DE); Swierstra, Nanne, 85092 Kösching (DE); Kur, Jaromir, 85129 Oberdolling (DE)
(74) Vertreter: Asch, Konrad

(56) Entgegenhaltungen:
- DE-A1- 3 842 609
- DE-C- 931 929

## Beschreibung

Die Erfindung betrifft eine Kugelgelenkverbindung gemäß der im Oberbegriff des Anspruchs 1 angegebenen Art.

Eine gattungsgemäße Kugelgelenk ist in der US 1854938 beschrieben.

Eine weitere Kugelgelenkverbindung ist in der DE 199 50 281 B4 beschrieben. Sie weist einen Kugelzapfen mit einer Gelenkkugel auf, wobei sich der zylindrische Schaft des Kugelzapfens von einer Seite eines Bauteils durch eine darin angeordnete Durchgangsbohrung zu dessen anderer Seite erstreckt und darin axial fixiert ist, wobei in der Wandung der Durchgangsbohrung eine durchgehende achsparallele Nut angeordnet ist.

In der DE 196 22 047 C2 ist eine weitere Kugelgelenkverbindung offenbart, bei der ein eine Gelenkkugel aufweisender Kugelzapfen in einem eine Durchgangsöffnung aufweisenden Bauteil geführt ist. Der in dem Bauteil geführten Kugelzapfen weist einen kegelförmigen Abschnitt auf und ein Endabschnitt des Zapfens ist mit einem Gewinde versehen, über das der Kugelzapfen lösbar mit dem Bauteil verbindbar ist. Das Gewinde des Zapfens ragt bis in die Durchgangsöffnung hinein und es weist in seinem Fußbereich einen durch eine Ringausnehmung gebildeten Freistich auf.

Als nachteilig erweist sich bei den bekannten Kugelgelenkverbindungen die ungünstige Krafteinleitung und der daraus resultierende ungünstige Spannungsverlauf im Bauteil, da die durch eine an der Gelenkkugel angreifenden Radialkraft resultierenden Spannungen sich auf den der Gelenkkugel zugewandten Randbereich der Durchgangsbohrung/ -öffnung des Bauteils konzentrieren. Diese Spannungskonzentration im Randbereich des Bauteils kann zu Rissbildung und somit zu einem frühzeitigen Versagen des Bauteils in diesem Bereich führen.

Der Erfindung liegt die Aufgabe zugrunde, eine Kugelgelenkverbindung gemäß der im Oberbegriff des Anspruchs 1 angegebenen Art unter Vermeidung der genannten Nachteile derart weiterzubilden, dass die Gefahr zur Rissbil dung und zu einem frühzeitigen Versagen des Bauteils vermindert wird.

Diese Aufgabe wird durch die kennzeichnenden Merkmale des Anspruchs 1 in Verbindung mit seinen Oberbegriffsmerkmalen gelöst.

Die Unteransprüche bilden vorteilhafte Weiterbildungen der Erfindung.

Der Erfindung liegt die Erkenntnis zugrunde, dass durch eine gezielte Reduktion der durch eine an der Gelenkku gel angreifende Radialkraft hervorgerufenen Spannungen in dem der Gelenkkugel zugewandten Randbereich der Durchgangsbohrung/ -öffnung des Bauteils die Gefahr einer Rissbildung in diesem Bereich vermindert wird und damit eine längere Lebensdauer des Bauteils gewährleistet ist.

Hierfür umfasst die Kugelgelenkverbindung einen Kugelzapfen mit einer Gelenkkugel, wobei der Kugelzapfen über eine Buchse in einer Durchgangsbohrung eines Fahrzeugbauteiles geführt ist und lösbar mit dem Fahrzeugbauteil verbunden ist. Die Buchse weist in einem der Gelenkkugel zugewandten Endbereich einen Buchsenflansch auf, wobei der Buchsenflansch auf einer Kontaktfläche des Fahrzeugbauteils aufliegt. Erfindungsgemäß ist der Buchsenflansch topfförmig, einen Boden- und Wandbereich aufweisend, ausgebildet und lediglich der Wandbereich des topfförmig ausgebildeten Buchsenflansches liegt auf der dazu korrespondierend ausgebildeten Kontaktfläche 10 des Fahrzeugbauteils auf. Hierdurch ist auf eine einfache Art und Weise eine Spannungsreduktion in dem der Gelenkkugel zugewandten Randbereich der Durchgangsbohrung des Fahrzeugbauteils gewährleistet, da die durch eine an der Gelenkkugel angreifende Radialkraft hervor gerufenen Spannungen sich nicht ausschließlich auf den der Gelenkkugel zugewandten Randbereich der Durchgangsbohrung des Fahrzeugbauteils konzentrieren, sondern sich zusätzlich auf den Wandbereich des Buchsenflansches verteilen. Die Folge daraus sind niedrigere lokale Spannungen in dem Fahrzeugbauteil, was die Gefahr einer Rissbildung reduziert und somit einer längeren Lebensdauer des Fahrzeugbauteils gewährleistet.

Gemäß einer Ausführungsform der Erfindung sind hierbei der Wandbereich des Buchsenflansches und die Kontaktfläche des Fahrzeugbauteils kegelförmig ausgebildet. Die kegelförmige Ausgestaltung dieser Flächen erweist sich als vorteilhaft, da diese fertigungstechnisch einfach herzustellen sind.

Gemäß einer anderen Ausführungsform der Erfindung sind der Wandbereich des Buchsenflansches und die Kontaktfläche des Fahrzeugbauteils kegelförmig ausgebildet. Die kegelförmige Ausgestaltung dieser Flächen erweist sich als vorteilhaft, da diese fertigungstechnisch einfach herzustellen sind.

Gemäß einer weiteren Ausführungsform der Erfindung sind der Wandbereich des Buchsenflansches und die Kontaktfläche des Fahrzeugbauteils kalottenförmig ausgebildet. Die kalottenförmige Ausbildung erweist sich als vorteilhaft, da hierdurch eine größere Kontaktfläche zwischen dem Wandbereich des Buchsenflansches und dem Fahrzeugbauteil zur Verfügung steht, was einer weitere Senkung des lokalen Spannungsniveaus in dem der Gelenkkugel zugewandten Randbereich der Durchgangsbohrung des Fahrzeugbauteils bedingt.

Vorzugsweise ist zwischen dem der Gelenkkugel zugewandten Endbereich des Fahrzeugbauteils und dem der Gelenkkugel zugewandten Endbereich der Buchse ein in axialer Richtung verlaufender Spalt angeordnet. Durch den Spalt ist in einer besonderes vorteilhafter Weise eine zusätzliche Spannungsverlagerung bedingt, da, wie bereits dargelegt wurde, durch den Spalt die auftretenden Spannungen von dem der Gelenkkugel zugewandten Randbereich der Durchgangsbohrung des Fahrzeugbauteils in das Innere des Fahrzeugbauteils verlagert werden. Als Folge davon ergibt sich eine gleichmäßige, großflächige Spannungsverteilung aus dem Randbereich des Fahrzeugbauteils ins Bauteilinnere. Die gleichmäßige Spannungsverteilung reduziert die Gefahr einer Rissbildung in dem der Gelenkkugel zugewandten Randbereich der Durchgangsbohrung des Fahrzeugbauteils und wirkt sich somit positiv auf die Lebensdauer des Fahrzeugbauteils aus. Durch den erfindungsgemäß angeordneten Spalt und die dadurch bedingte Aussparung im Randbereich der Verbindung wird zudem noch in Vorteilhafterweise eine Gewichts- und Kostenreduktion erzielt.

Der Einfachheithalber ist der zwischen dem der Gelenkkugel zugewandten Endbereich des Fahrzeugbauteils und dem der Gelenkkugel zugewandten Endbereich der Buchse angeordnete Spalt durch eine radial umlaufende Nut gebildet. Vorzugsweise ist dabei die Nut in den der Gelenkkugel zugewandten Endbereich des Fahrzeugbauteil und/oder in den der Gelenkkugel zugewandten Endbereich der Buchse eingebracht.

Um die durch den Spalt beabsichtigte Spannungsreduzierung zu gewährleisten, weist der Spalt in axialer Richtung betrachtet eine Länge von etwa 1/4 bis 1/3 des Durchmessers der Durchgangsbohrung und in radiale Richtung betrachtet eine Breite von etwa 0,1 mm bis 2 mm, insbesondere aber 1 mm, auf.

Vorzugsweise weist der Kugelzapfen eine konische oder zylindrische Außenmantelfläche und die Buchse eine dazu korrespondierend ausgebildete zylindrische oder konische Innenmantelfläche auf.

Gemäß einer weiteren Ausführungsform der Erfindung ist in einem der Gelenkkugel gegenüberliegende Bereich des Kugelzapfens eine Schraubverbindung angeordnet, über die der Kugelzapfen lösbar mit dem Fahrzeugbauteil verbunden ist.

Um einen sicheren Sitz der Buchse in dem Fahrzeugbauteil zu gewährleisten, ist die Buchse vorzugsweise in das Fahrzeugbauteil eingepasst und eingeschraubt.

Vorzugsweise sind die Buchse und das Fahrzeugbauteil aus unterschiedlichen Bauteilen gefertigt, insbesondere die Buchse aus Stahl und Bauteil aus Aluminium.

Weitere Vorteile, Merkmale und Anwendungsmöglichkeiten der vorliegenden Erfindung ergeben sich aus der nachfolgenden Beschreibung in Verbindung mit den in der Zeichnung dargestellten Ausführungsbeispielen.

Die Erfindung wird im folgenden anhand der in der Zeichnung dargestellten Ausführungsbeispielen näher beschrieben. In der Beschreibung, in den Ansprüchen und in der Zeichnung werden die in der hinten angeführten Liste der Bezugszeichen verwendeten Begriffe und zugeordnete Bezugszeichen verwendet.

In der Zeichnung bedeutet:
- Fig. 1: eine schematische Schnittdarstellung einer Kugelgelenkverbindung nach dem Stand der Tech- nik;
- Fig. 2: eine schematische Schnittdarstellung einer Kugelgelenkverbindung, bei der zwischen Buchse und Fahrzeugbauteil ein Spalt angeord- net ist;
- Fig. 3: eine schematische Schnittdarstellung einer erfindungsgemäßen Kugelgelenkverbindung, bei der der Wandbereich des Buchsenflansches und die Kontaktfläche des Fahrzeugsbauteils ke- gelförmig ausgebildet sind;
- Fig. 4: eine weitere Ausführungsform der erfindung- sgemäßen Kugelgelenkverbindung, bei der der Wandbereich des Buchsenflansches und die Kon- taktfläche des Fahrzeugbauteils kalotten-förmig ausgebildet sind;
- Fig. 5: die Kugelgelenkverbindung aus Fig. 4, wobei zwischen Buchse und Fahrzeugbauteil zusätz- lich ein Spalt angeordnet ist.

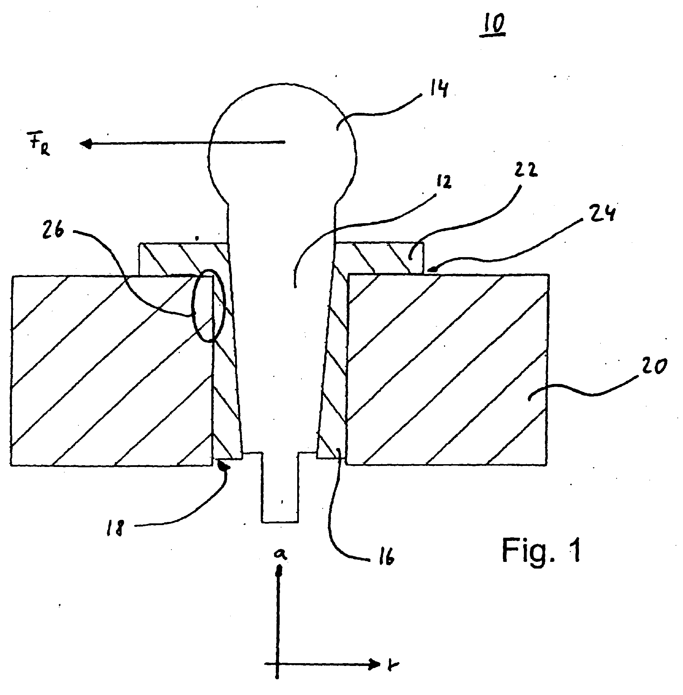

Die in Fig. 1 in einer vereinfachten Schnittdarstellung mehr oder minder schematisch dargestellte, insgesamt mit der Bezugsziffer 1 bezeichnete, Kugelgelenkverbindung nach dem Stand der Technik umfasst im Wesentlichen einen Kugelzapfen 12 mit einer Gelenkkugel 14, der über eine Buchse 16 in einer Durchgangsbohrung 18 eines Fahrzeugbauteils 20 geführt und lösbar mit dem Fahrzeugbauteil 20 verbunden ist. Die Buchse 16 weist einen Buchsenflansch 22 auf und ist so in der Durchgangsbohrung 18 angeordnet, dass der Buchsenflansch 22 der Buchse auf einer zugeordneten Kontaktfläche 24 des Fahrzeugbauteils 20 aufliegt.

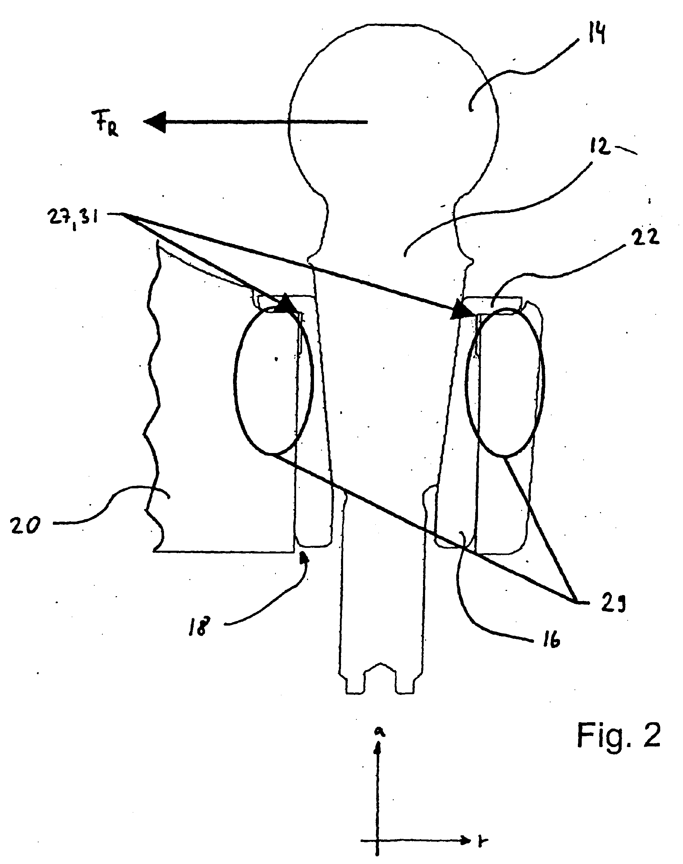

Die aus dem Stand der Technik bekannte Kugelgelenkverbindung 10 erweist sich als nachteilig, da eine an der Gelenkkugel 14 angreifende Radialkraft F*_{R}* zu einer Spannungskonzentration in dem der Gelenkkugel 14 zugewandten Randbereich der Durchgangsbohrung 18, vorliegend durch Bezugszeichen 26 symbolisiert, geführt. Diese Spannungskonzentration in dem Bereich 26 kann zu einer Rissbildung und somit einem frühzeitigen Versagen des Fahrzeugbauteils 20 führen. Bei der in Fig. 2 dargestellten Kugelgelenkverbindung 10 ist zwischen dem der Gelenkkugel 14 zugewandten Endbereich des Fahrzeugbauteils 20 und dem der Gelenkkugel 14 zugewandten Endbereich der Buchse 16 ein in axiale Richtung a verlaufender Spalt 27 angeordnet.

Hierbei ist der Spalt 27 durch eine, lediglich in die Buchse 16 eingebrachte, radial umlaufende Nut 31 gebildet.

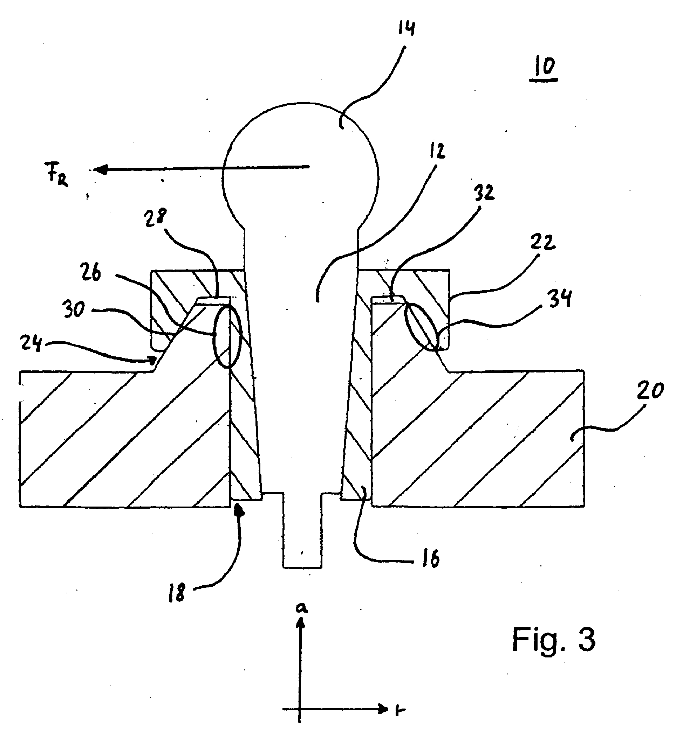

Bei der erfindungsgemäßen Kugelgelenkverbindung 10 nach Fig. 3 ist der Buchsenflansch 22 topfförmig ausgebildet, d.h., der Buchsenflansch 22 umfasst einen Bodenbereich 28 und einen Wandbereich 30 und lediglich der Wandbereich 30 des topfförmig ausgebildeten Buchsenflansches 22 liegt auf der korrespondierend ausgebildeten Kontaktfläche 24 des Fahrzeugbauteils 20 auf, während zwischen der Stirnfläche des Fahrzeugbauteils 20 und dem Bodenbereich 28 des topfförmig ausgebildeten Buchsenflansches 22 ein Spalt 32 verbleibt.

Durch die erfindungsgemäße Ausgestaltung des Buchsenflansches 22 und der zugeordneten Kontaktfläche 24 ist sichergestellt, dass die durch Radialkräfte *F_{R}* hervorgerufenen Spannungen sich nicht mehr ausschließlich auf den Bereich 26 des Fahrzeugbautels 20 konzentrieren, sonder sich zusätzlich auf einen weiteren Bereich 34 des Fahrzeugbauteils 20 verteilen. Die dadurch erzielte Spannungsverteilung reduziert somit die lokalen Spannungen in dem Bereich 26 und beugt somit einer Rissbildung in diesem Bereich vor, so dass eine längere Lebensdauer des Fahrzeugbauteils 20 gewährleistet ist.

Bei dem in Fig. 3 dargestellten Ausführungsbeispiel sind der Wandbereich 30 des topfförmigen Buchsenflansches 22 und die dazu korrespondierend ausgebildete Kontaktfläche 24 des Fahrzeugbauteils 20 kegelförmig ausgebildet.

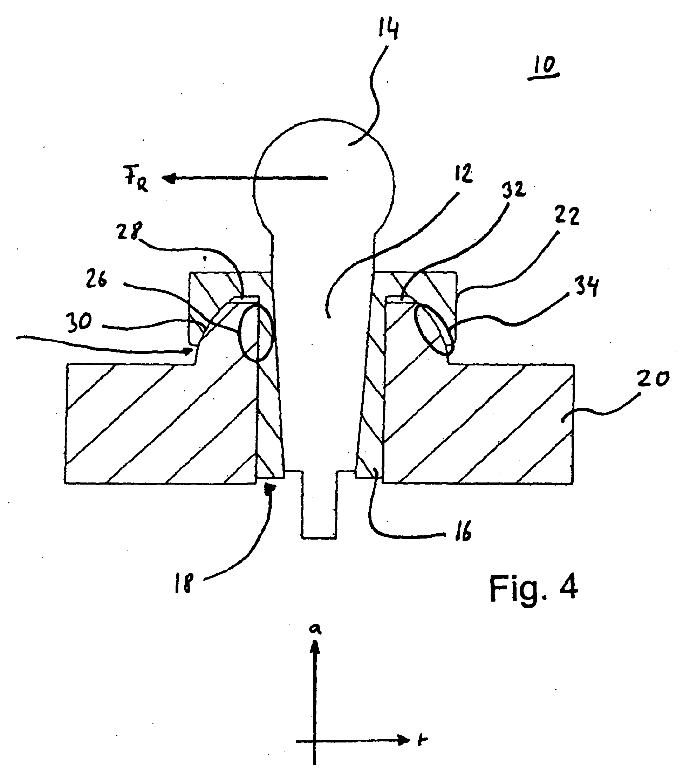

Eine weitere Ausführungsform der erfindungsgemäßen Kugelgelenkverbindung 10 ist in Fig. 4 dargestellt. Im Unterschied zu Fig. 3 ist bei der in Fig. 4 dargestellten Kugelgelenkverbindung 10 der topfförmige Buchsenflansch 22 anders ausgebildet. Entsprechend dieser Ausführungsform sind der Wandbereich 30 des Buchsenflansches 22 und die dazu korrespondierend ausgebildete Kontaktfläche 24 des Fahrzeugbauteils 20 kalottenförmig ausgebildet. Auch bei dieser Ausgestaltung von Buchsenflansch 22 und Kontaktfläche 24 des Fahrzeugbauteils 20 ist gewährleistet, dass der Bodenbereich 28 des Buchsenflansches 22 nicht auf der Stirnfläche der Kontaktfläche 24 des Fahrzeugbauteils 20 aufliegt, sondern lediglich über die Kalottenfläche formschlüssig miteinander verbunden sind. Die bereits oben geschilderten Vorteile treten entsprechend auch bei dieser Ausführungsform aus.

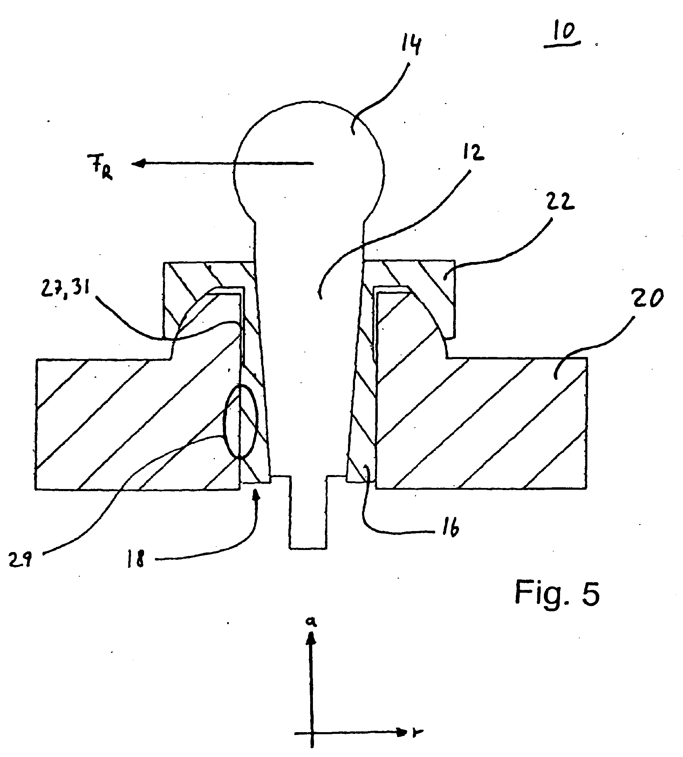

Eine weitere Ausführungsform der erfindungsgemäßen Kugelgelenkverbund 10 zeigt Fig. 5. Hierbei ist zwischen dem der Gelenkkugel 14 zugewandten Endbereich des Fahrzeugbauteils 20 und dem der Gelenkkugel 14 zugewandten Endbereichs der Buchse 16 zusätzlich ein in axiale Richtung a verlaufender Spalt 27 angeordnet.

Der Spalt 27 bedingt eine zusätzliche Spannungsverlagerung der durch die Radialkraft F_{R} hervorgerufenen Spannungen in den Bereich 29 im Inneren des Fahrzeugbauteils 20. Hierdurch ist eine gleichmäßige Spannungsverteilung über das gesamte Fahrzeugbauteil 20 gewährleistet, was die Gefahr einer Rissbildung in dem Fahrzeugbauteil 20 zusätzlich reduziert und damit zu einer Erhöhung der Lebensdauer des Fahrzeugbauteils 20 beiträgt. Vorliegend ist der Spalt 27 durch eine, lediglich in die Buchse 16 eingebrachte, umlaufende radial Nut 31 gebildet. Die Nut 31 kann aber auch durch eine lediglich in das Fahrzeugbauteil 20 oder durch zwei gegenüberliegend angeordnete, jeweils in die Buchse 16 und das Fahrzeugbauteil 20 eingebrachte Nut 31 gebildet sein.

In axialer Richtung a betrachtet weist der Spalt 27 eine Länge von etwa 1/4 bis 1/3 des Durchmessers der Durchgangsbohrung 18 auf während in radiale Richtung r betrachtet der Spalt 27 eine Dicke von vorzugsweise 1mm aufweist.

Wie aus den Fig. 3 bis 5 der erfindungsgemäßen Kugelgelenkverbindung 10 ersichtlich ist, weist der dargestellte Kugelzapfen 12 eine konische Außenmantelfläche und die Buchse 16 eine dazu korrespondierend ausgebildete konische Innenmantelfläche auf. Die Außenmantelfläche des Kugelzapfens 12 und die dazu korrespondierend ausgebildete Innenmantelfläche der Buchse 16 können aber auch zylindrisch ausgebildet sein.

In den oben beschriebenen Ausführungsspielen der Kugelgelenkverbindung 10 ist die Buchse 16 aus Stahl und das Fahrzeugbauteil 20 aus Aluminium gefertigt und die in der Durchgangsbohrung 18 des Fahrzeugbauteils 20 geführten Buchse 16 ist in das Fahrzeugbauteil 20 eingepresst. Die Buchse 16 kann jedoch auch in das Fahrzeugbauteil 20 eingeschraubt sein.

Die lösbare Verbindung des Kugelzapfens 12 mit dem Fahrzeugbauteil 20 ist bei der in den Fig. 2 bis 5 dargestellten Kugelgelenkverbund 10 jeweils durch eine, hier aus Gründen der Übersichtlichkeit nicht dargestellte, Schraubverbindung realisiert, die in einem der Gelenkkugel 14 gegenüberliegenden Bereich des Kugelzapfens 12 angeordnet ist.

Die Erfindung zeichnet sich dadurch aus, dass durch gezielte konstruktive Maßnahmen die lokalen Spannungsspitzen im Bereich des der Gelenkkugel 14 zugewandeten Randbereich des Fahrzeugbauteils 20 abgebaut werden, wodurch die Gefahr einer Rissbildung minimiert und somit eine höhere Lebensdauer des Fahrzeugbauteils 20 gewährleistet wird.

### Bezugszeichenliste

- 10: Kugelgelenkverbindung
- 12: Kugelzapfen
- 14: Gelenkkugel
- 16: Buchse
- 18: Durchgangsbohrung
- 20: Fahrzeugbauteil
- 22: Buchsenflansch
- 24: Kontaktfläche des Fahrzeugbauteils
- 26: Bereich der Spannungskonzentration
- 27: Spalt
- 28: Bodenbereich des Buchsenflansches
- 29: Bereich im Inneren des Fahrzeugbauteils
- 30: Wandbereich des Buchsenflansches
- 31: umlaufende Nut
- 32: Spalt zwischen Stirnfläche des Fahrzeugbauteils und Bodenbereich des Buchsenflansches
- 34: weiterer Bereich des Fahrzeugbauteils

- F_{R}: Radialkraft
- a: axiale Richtung
- r: radiale Richtung

## Patentansprüche

1. Kugelgelenkverbindung (10), insbesondere für ein Kraftfahrzeug, umfassend einen Kugelzapfen (12) mit einer Gelenkkugel (14), wobei der Kugelzapfen (12) über eine Buchse (16) in einer Durchgangsbohrung (18) eines Fahrzeugbauteils (20) geführt ist, und der Kugelzapfen (12) mit dem Fahrzeugbauteil (20) lösbar verbunden ist, und die Buchse (16) in einem der Gelenkkugel (14) zugewandten Endbereich einen Buchsenflansch (22) aufweist und der Buchsenflansch (22) auf einer Kontaktfläche (24) des Fahrzeugbauteils (20) aufliegt, **dadurch gekennzeichnet, dass** der Buchsenflansch (22) topfförmig, einen Boden- 28 und Wandbereich (30) aufweisend, ausgebildet ist und lediglich der Wandbereich (30) des topfförmig ausgebildeten Buchsenflansches (22) auf der dazu korrespondierend ausgebildeten Kontaktfläche (24) des Fahrzeugbauteils (20) aufliegt.

2. Kugelgelenkverbindung nach Anspruch 1, **dadurch gekennzeichnet, dass** der Wandbereich (30) des Buchsenflansches (22) und die Kontaktfläche (24) des Fahrzeugbauteils (20) kegelförmig ausgebildet sind.

3. Kugelgelenkverbindung nach Anspruch 1, **dadurch gekennzeichnet, dass** der Wandbereich (30) des Buchsenflansches (22) und die Kontaktfläche (24) des Fahrzeugbauteils (20) kalottenförmig ausgebildet sind.

4. Kugelgelenkverbund nach Ansprüchen 1 bis 3, **dadurch gekennzeichnet, dass** zwischen dem der Gelenkkugel (14) zugewandten Endbereich des Fahrzeugbauteils (20) und dem der Gelenkkugel (14) zugewandten Endbereich der Buchse (16) ein in axialer Richtung (a) verlaufender Spalt (27) angeordnet ist.

5. Kugelgelenkverbindung an Anspruch 4, **dadurch gekennzeichnet, dass** der Spalt (27) durch eine radial umlaufende Nut (31) gebildet ist und die Nut (31) in dem der Gelenkkugel (14) zugewandten Endbereich des Fahrzeugbauteils (20) und/oder dem der Gelenkkugel (14) zugewandten Endbereich der Buchse (16) eingebracht ist.

6. Kugelgelenkverbindung nach Anspruch 5, **dadurch gekennzeichnet, dass** die Abmessung des Spaltes (27) in axiale Richtung (a) betrachtet etwa 1/4 bis 1/3 des Durchmessers der Durchgangsbohrung (18) und in radiale Richtung (r) betrachtet etwa 0,1 bis 2 mm, insbesondere etwa 1 mm, beträgt.

7. Kugelgelenkverbindung nach einem der vorstehenden Ansprüche, **dadurch gekennzeichnet, dass** der Kugelzapfen (12) eine konische oder zylindrische Außenmantelfläche und die Buchse ((16) eine dazu korrespondierend ausgebildete zylindrische oder konische Innenmantelfläche aufweist.

8. Kugelgelenkverbindung nach einem der vorgenannten Ansprüche, **dadurch gekennzeichnet, dass** der Kugelzapfen (12) über eine Schraubverbindung lösbar mit dem Fahrzeugbauteil (20) verbunden ist.

9. Kugelgelenkverbindung nach Anspruch 8, **dadurch gekennzeichnet, dass** die Schraubverbindung in einem der Gelenkkugel (14) gegenüberliegenden Bereich des Kugelzapfens (12) angeordnet ist.

10. Kugelgelenkverbindung nach einem der vorstehenden Ansprüche, **dadurch gekennzeichnet, dass** die Buchse (16) und das Fahrzeugbauteil (20) eingepresst oder eingeschraubt ist.

11. Kugelgelenkverbindung nach einem der vorstehenden Ansprüche, **dadurch gekennzeichnet, dass** die Buchse (16) und das Fahrzeugbauteil (20) aus unterschiedlichen Werkstoffen gefertigt sind, insbesondere die Buchse (16) aus Stahl und das Fahrzeugbauteil (20) aus Aluminium.

## Claims

1. Ball joint connection (10), in particular for a motor vehicle, comprising a ball pin (12) with a joint ball (14), the ball pin (12) being guided by means of a bush (16) in a through bore (18) of a vehicle component (20), and the ball pin (12) being detachably connected to the vehicle component (20), and the bush (16) having a bush flange (22) in an end region facing toward the joint ball (14), and the bush flange (22) being supported on a contact surface (24) of the vehicle component (20), **characterized in that** the bush flange (22) is of pot-shaped design and has a base region (28) and a wall region (30), and only the wall region (30) of the pot-shaped bush flange (22) is supported on the contact surface (24), which is designed correspondingly to said wall region (30), of the vehicle component (20).

2. Ball joint connection according to Claim 1, **characterized in that** the wall region (30) of the bush flange (22) and the contact surface (24) of the vehicle component (20) are of conical design.

3. Ball joint connection according to Claim 1, **characterized in that** the wall region (30) of the bush flange (22) and the contact surface (24) of the vehicle component (20) are of spherical-cap-shaped design.

4. Ball joint connection according to Claims 1 to 3, **characterized in that** a gap (27) running in the axial direction (a) is arranged between that end region of the vehicle component (20) which faces towards the joint ball (14) and that end region of the bush (16) which faces towards the joint ball (14).

5. Ball joint connection according to Claim 4, **characterized in that** the gap (27) is formed by a radially encircling groove (31) and the groove (31) is formed **in that** end region of the vehicle component (20) which faces towards the joint ball (14) and/or that end region of the bush (16) which faces towards the joint ball (14).

6. Ball joint connection according to Claim 5, **characterized in that** the dimension of the gap (27) as viewed in the axial direction (a) amounts to approximately 1/4 to 1/3 of the diameter of the through bore (18) and the dimension of the gap (27) as viewed in the radial direction (r) amounts to approximately 0.1 to 2 mm, in particular approximately 1 mm.

7. Ball joint connection according to one of the preceding claims, **characterized in that** the ball pin (12) has a conical or cylindrical outer lateral surface and the bush (16) has a cylindrical or conical inner lateral surface designed correspondingly thereto.

8. Ball joint connection according to one of the preceding claims, **characterized in that** the ball pin (12) is detachably connected to the vehicle component (20) by means of a screw connection.

9. Ball joint connection according to Claim 8, **characterized in that** the screw connection is arranged in a region of the ball pin (12) situated opposite the joint ball (14).

10. Ball joint connection according to one of the preceding claims, **characterized in that** the bush (16) is pressed or screwed into the vehicle component (20).

11. Ball joint connection according to one of the preceding claims, **characterized in that** the bush (16) and the vehicle component (20) are produced from different materials, in particular, the bush (16) is composed of steel and the vehicle component (20) is produced from aluminium.

## Revendications

1. Articulation à rotule (10), en particulier pour un véhicule automobile, comprenant un tourillon sphérique (12) avec une rotule d'articulation (14), le tourillon sphérique (12) étant guidé par le biais d'une douille (16) dans un alésage traversant (18) d'un composant (20) du véhicule, le tourillon sphérique (12) étant connecté de manière détachable au composant (20) du véhicule, la douille (16) présentant une bride de douille (22) dans une région d'extrémité tournée vers la rotule d'articulation (14), et la bride de douille (22) reposant sur une surface de contact (24) du composant (20) du véhicule, **caractérisée en ce que** la bride de douille (22) est réalisée en forme de pot et présente une région de fond (28) et une région de paroi (30), et seulement la région de paroi (30) de la bride de douille (22) réalisée en forme de pot repose sur la surface de contact (24) du composant (20) du véhicule réalisée d'une manière correspondant à celle-ci.

2. Articulation à rotule selon la revendication 1, **caractérisée en ce que** la région de paroi (30) de la bride de douille (22) et la surface de contact (24) du composant (20) du véhicule sont réalisées sous forme conique.

3. Articulation à rotule selon la revendication 1, **caractérisée en ce que** la région de paroi (30) de la bride de douille (22) et la surface de contact (24) du composant (20) du véhicule sont réalisées sous forme de calotte.

4. Articulation à rotule selon les revendications 1 à 3, **caractérisée en ce qu'**il est prévu, entre la région d'extrémité du composant (20) du véhicule tournée vers la rotule d'articulation (14) et la région d'extrémité de la douille (16) tournée vers la rotule d'articulation (14), une fente (27) s'étendant dans la direction axiale (a).

5. Articulation à rotule selon la revendication 4, **caractérisée en ce que** la fente (27) est formée par une rainure radialement périphérique (31) et la rainure (31) est pratiquée dans la région d'extrémité du composant (20) du véhicule tournée vers la rotule d'articulation (14) et/ou dans la région d'extrémité de la douille (16) tournée vers la rotule d'articulation (14).

6. Articulation à rotule selon la revendication 5, **caractérisée en ce que** la dimension de la fente (27), considérée dans la direction axiale (a), représente approximativement 1/4 à 1/3 du diamètre de l'alésage traversant (18), et, considérée dans la direction radiale (r), vaut approximativement 0,1 à 2 mm, notamment approximativement 1 mm.

7. Articulation à rotule selon l'une quelconque des revendications précédentes, **caractérisée en ce que** le tourillon sphérique (12) présente une surface d'enveloppe extérieure conique ou cylindrique et la douille (16) présente une surface d'enveloppe intérieure cylindrique ou conique réalisée d'une manière correspondant à celle-ci.

8. Articulation à rotule selon l'une quelconque des revendications précédentes, **caractérisée en ce que** le tourillon sphérique (12) est connecté de manière détachable au composant (20) du véhicule par le biais d'une connexion vissée.

9. Articulation à rotule selon la revendication 8, **caractérisée en ce que** la connexion vissée est disposée dans une région du tourillon sphérique (12) opposée à la rotule d'articulation (14).

10. Articulation à rotule selon l'une quelconque des revendications précédentes, **caractérisée en ce que** la douille (16) et le composant (20) du véhicule sont pressés ou vissés.

11. Articulation à rotule selon l'une quelconque des revendications précédentes, **caractérisée en ce que** la douille (16) et le composant (20) du véhicule sont fabriqués en matériaux différents, et en particulier la douille (16) est fabriquée en acier et le composant (20) du véhicule en aluminium.
